# EUROPEAN PATENT SPECIFICATION

(11) **EP 1 046 145 B1**
(45) Date of publication and mention of the grant of the patent: **20.03.2002**
(21) Application number: 99900729.7
(22) Date of filing: 04.01.1999
(51) Int. Cl.: G08B 5/36, G01S 1/68

(54) **IMPROVEMENTS IN AND RELATING TO EMITTERS**
VERBESSERUNGEN AN UND BEI SENDERN
AMELIORATIONS APPORTEES AUX EMETTEURS

(30) Priority: 06.01.1998 GB 9800133; 20.03.1998 GB 9805856
(43) Date of publication of application: 25.10.2000
(73) Proprietor: Sea Marshall Rescue Systems, Ltd., Hull, HU3 4DL (GB)
(72) Inventor: MARSHALL, Anthony David, East Yorkshire, HU17 9GG (GB)
(74) Representative: VOSSIUS & PARTNER
(86) International application number: US9900021
(87) International publication number: WO9935625

(56) References cited:
- EP-A- 0 166 534
- CA-A- 1 287 909
- FR-A- 2 604 046
- GB-A- 1 073 879
- PATENT ABSTRACTS OF JAPAN vol. 018, no. 605 (M-1706), 17 November 1994 & JP 06 227488 A (NIIGATA ENG CO LTD;OTHERS: 01), 16 August 1994

## Description

### Background of the Invention

This invention concerns improvements in and relating to emitters, particularly, but not exclusively, to emitters for indicating their position to a remote location.

In many cases it is desirable to locate an item or person who has in some way become separated from their expected location. For instance, it is desirable to be able to locate a person separated from a sea-going vessel when that vessel sinks or the person is swept overboard. Other applications may include detecting a person lost in a remote location on land and/or a piece of equipment, for which remote detection is desirable.

CA-A-1 287 909 discloses a portable light beacon having a light that operates when a water sensitive switch is immersed in water. The beacon comprises a light source, radio emitter and a power source. However, the light source used is a gas filled bulb type which emits light by electro-incandescence.

The present invention aims to provide a more readily detectable emitter which is highly portable, reliable and suitable for continuous use without interfering with every day activities.

### Summary of the Invention

In order to realize the afore-mentioned objectives, a position indicating emitter according to the claims is disclosed.

According to a first aspect of the invention we provide an emitter comprising a power source, light emitting means and radiowave emitting means, the. light emitting means comprising a first and second electrode, a dielectric material and an electroluminescent material being provided between the first and second electrodes, the radiowave emitting means comprising an antenna.

Preferably the first and second electrodes and the antenna are provided within a casing. The casing may comprise a length or loop of material. The casing may be incorporated in, mounted on or attached to an item, such as a life jacket.

The antenna may comprise the first and/or second electrode.

According to a second aspect of the invention we provide an emitter comprising a power source, light emitting means and radio wave emitting means, the light emitting means comprising a first and second electrode, a dielectric material and an electroluminescent material being provided between the first and second electrodes, the radio wave emitting means comprising an antenna, the antenna comprising the first and/or second electrode.

The first and second aspects of the invention may include one or more of the following features or possibilities, independently of one another.

The emitter may be provided as a discrete item or may be incorporated in or on a further item. The emitter may be mounted on or in or be provided integrally with another item, such as a life jacket.

The emitter may comprise a loop providing the light emitting means and the antenna, the loop being connected to a unit, the unit providing the power source. The unit may further comprise a part of the radio wave emitting means and/or control means.

The power source is preferably a DC source. The source may be a battery. One or more batteries may be provided. The batteries may be of the alkaline and/or lithium type. The power source may be provided together with an inverter or power convertor. The power source may be converted to give between 20 and 400V, more preferably between 70 and 220V. The power source may be converted to give a frequency of between 50Hz and 2750Hz and more preferably of between 70Hz and 2500Hz.

Preferably a single power source is used for the light emitting means and the radio wave emitting means.

The power source may be controlled by control means. The control means may complete or break the electrical circuit. The control means may close the electrical circuit to give light emission and/or radio wave emission.

The control means may include a manually operated on and/or off and/or on and off switch. The control means may include an automatic on control. The automatic on control may be activated where predetermined conditions are met. The predetermined conditions may be or include emersion of the emitter or part thereof in water, for instance for a predetermined period. The predetermined period may be greater than 5 seconds, greater than 10 seconds or even greater than 20 seconds.

The control means may include selection means for continuous and/or intermittent (flashing) light emission and/or radio wave emission. The light emission may flash at between 20 and 80 flashes per minute.

The control means may include radio wave frequency selection means.

The first electrode may be formed of metal. The first electrode may form a core to the light emitting means and preferably to the radio wave emitting means too.

The second electrode may be provided around the first electrode. The second electrode may be provided about the axis of the first electrode, for instance concentrically there about. The second electrode may allow the passage of visible light through it. The second electrode may be discontinuously provided about the first electrode. The second electrode may be provided by one or more braided electrical conductors. The braids may define apertures there between to allow the passage of visible light.

The dielectric material may be provided as a layer between the first and second electrodes. The dielectric material may be provided as a sleeve. The dielectric material may be provided around the first electrode. The second electrode may be provided around the dielectric material. The dielectric material may be provided as a concentric sleeve on the first electrode.

The electroluminescent material may be provided as particulate material within the dielectric material. The electroluminescent particles may be homogeneously provided within the dielectric material. The electroluminescent material may be phosphor.

The light emitted is preferably coherent. The light may have a wavelength of between 480 and 530nm and more preferably of between 500 and 510nm.

An outer cover may be provided over the second electrode. The outer cover is at least partially transparent to visible light and may be transparent throughout its extent. The outer cover is preferably waterproof.

The combined light emitting means and antenna may be provided in the form of a strand, fibre or cord. The combined light emitting means and antenna may be flexible. The strand, fibre or cord may have a diameter of between 0.1mm and 10mm and more preferably a diameter of between 0.3mm and 3mm. The bending diameter may be less than 20 times, more preferably less than 10 times and ideally less than 7 times the diameter of the strand, fibre or cord.

The radio wave emitting means may include a radio frequency transmitter. The radio frequency transmitter may provide between 2mW and 250mW into the antenna and more preferably between 20mW and 150mW. The radio wave emitter means may transmit at 121.5MHz and/or 243MHz. One or more further emission frequencies may be provided.

The antenna may include both first and second electrodes. The antenna may be a looped antenna.

According to a third aspect of the invention we provide an item incorporating and/or provided with an emitter according to the first and/or second aspect of the invention.

The item may be an item of clothing, such as a survival suit, waterproof suit, wet suit, dry suit, diving suit, a coat, a waterproof coat or harness.

The item may be a buoyancy item or aid such as a life jacket, life raft, lifeboat, floatation aid or life belt.

### Brief Description of the Drawings

Various embodiments of the invention will now be described, by way of example only, and with reference to the accompanying drawings in which:
Figure 1 illustrates a perspective view in partial cross section of a component of the invention;
Figure 2 illustrates schematically the circuitry of an embodiment of the present invention; and
Figure 3 illustrates an embodiment of the invention in use.

### Detailled Description of the Preferred Embodiments

In a wide variety of situations, but particularly in search and rescue applications, it is desirable for a person to be able to indicate their position to remote locations. In the case of a search and rescue scenario, this enables the searchers to detect and locate the person and to provide rescue means at the relevant location to save that person.

To indicate their location it is necessary for the person to have some form of emitter in their possession. In the case of a person who becomes separated from the vessel on which they are travelling, for instance by being washed overboard, in the case of a person who becomes separated from the vessel because that vessel sinks and in the case where that person or persons are present in a life raft or life boat, it is desirable for the emitter to be readily portable. It is not practical for normal forms of emitter, such as radios, to be provided and/or conveyed to the remote location in emergency situations.

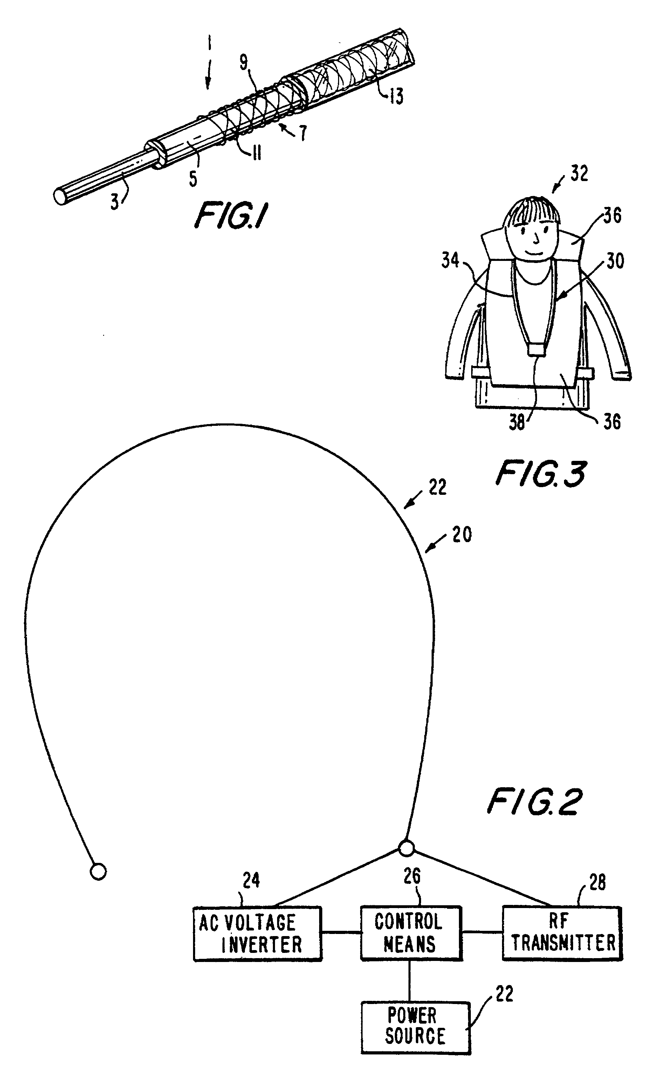

The present invention, in one embodiment, and as illustrated in Figure 1 includes an emitter in the form of a flexible strand 1. The strand 1 comprises a central solid core 3 of electrically conducting material provided within a sleeve 5 of dielectric material which incorporates electroluminescent particles. The dielectric sleeve 5 is itself enclosed within an electrode 7 formed of braided electrical conductors 9 which define apertures 11 through which the dielectric layer 5 underneath is exposed. The outer electrode 11 is itself enclosed within a watertight insulating sleeve 13. By providing a transparent sleeve 13 a significant portion of the dielectric material 5 is externally visible.

The overall circuit structure of the device is illustrated in one embodiment in Figure 2. In this case the light emitting means 20, incorporating the antenna, is connected to a power source 22. The circuit between the core electrode and the outer electrode in the light emitting means is completed by the dielectric material 5 provided between the inner 3 and outer 7 electrodes.

As well as a power source 22, the circuit includes an inverter 24 to generate an AC voltage in the circuit. A voltage of 80 to 120 volts with a frequency of between 800Hz and 2500Hz is generally employed.

In combination with control means 26 this circuit when activated generates a significant light output. When an AC voltage is applied between the electrodes 3 and 7 and hence across the dielectric material 5 the electroluminescent particles within the dielectric material emit light in response to that electric field. Phosphor particles are suitable for this application.

Light generated within the dielectric material 5 is emitted through the apertures 11 in the outer electrode 7 and through the transparent outer cover 13 into the surrounding environment.

The flexible strand is generally provided at between 0.5mm and 2.5mm in diameter.

As the light generated by the electroluminescent particles is coherent, containing only those frequencies of the visible spectrum applicable to the colour in use, the light is very bright and penetrating. The light generated is highly visible even in smoky, foggy, or other reduced visibility conditions in which incandescent light, due to its complex components, is refracted and poorly visible as a result.

The emission of highly visible light in this way enables the precise position of the emitter to be indicated to detectors, such as a search party, at short and moderate range.

To assist in long range locating of the emitter, the circuit also incorporates a radio frequency transmitter 28 which employs one or both of the electrodes 3 and 7 as its antenna to emit a homing signal.

Under the operating conditions indicated above the transmitter provides between 25mW and 125mW into the antenna. The transmitter 28 can readily be provided so as to emit one or more distinctive frequencies, VHF and/or UHF, for instance the international distress and homing frequency of 121.5/243MHz. By providing a loop antenna 360° tracking is provided.

Using a conventional PP3 battery as the power source, it is possible to provide an emitter having light emitting properties in flashing mode for approximately 24 hours and in constant mode for over 6 hours, as well as radio transmission of between 12 and 24 hours. Such a system operates successfully at between -10°C and +55°C.

The length of the light emitting ariel portion can be varied as desired. Additionally due to its flexible nature it can be bent or coiled during use and/or during storage.

In an alternative form of the invention, not shown, the emitter may take the form of a flexible strand containing a core of electrically conducting material provided with a sleeve of dielectric material and incorporating electroluminescent particles. The dielectric sleeve is enclosed within an electrode of a braided form so as to allow light to pass out through the electrode. By applying power to the electrodes, light is generated. Additionally, as part of the strand, an antenna for the radiowave emitting means is also provided. This antenna may be provided outside the transparent sleeve for the light emitting means or provided within that sleeve. The antenna may be provided parallel to the light emitting components in such a system.

The functions and complexity of the control unit 24 for the device can be varied significantly.

In one embodiment the control circuit may provide an on and off control for the emitter. The control may also incorporate automatic activation should the unit be submersed in water for a predetermined period, for instance 20 to 30 seconds, as well as or instead of the manual control.

The control means 26 may also include an indicator showing whether the power source 22 is functional or not and/or continuous or flashing mode selection for the light source and/or frequency selection for the RF transmitter 28. Frequency selection, for instance, allows a test frequency to be selected for testing the device and/or for practising emergency drills without alerting the authorities through use of the international distress and homing frequency.

A device according to the present invention can be provided on the person and/or in proximity thereto in a wide variety of ways. For instance, as illustrated in Figure 3 the device 30 can be worn by the user 32 integrally provided as a loop 34 about the neck of the user 32 on the front of a life jacket 36. The packet 38 containing the power source and other components is provided on the front of the life jacket 36.

The system can also be provided as an integral component of a life raft, mounted on a life boat, worn as a cord around the neck of the user (mariners, aviators, or remote travelers) or in a wide variety of other applications. The emitter can be used in emergency situations or routinely to indicate the user's position.

The construction of the emitter and its manner of the operation make it resistant to impact, vibration or shock, and also enable it to function in water for extended periods. It is also suitable for use in hazardous atmospheres, such as those in which there is a risk of explosion.

## Claims

1. A position indicating emitter,
comprising:
a power source (22);
a light emitter that is coupled to said power source (22) and that has a first electrode (3), a second electrode (7), and an electroluminescent materials (5) that is positioned substantially between said first electrode (3) and said second electrode (7), wherein said first electrode (3), said second electrode (7), and said electroluminescent material (5) are contained in a casing (13); and
a radio emitter (28) that is coupled to said power source (22) and that has an antenna that is contained in said casing (13).

2. The position indicating emitter of claim 1, wherein said casing (13) is provided in a substantially looped form.

3. The position indicating emitter of claim 1, wherein said antenna is formed from at least one of said first electrode (3) and said second electrode (7).

4. The position indicating emitter of claim 1, wherein said antenna is formed from a material separate from said first electrode (3) and said second electrode (7).

5. The position indicating emitter of claim 1, wherein said second electrode (7) is provided concentrically around said first electrode (3).

6. The position indicating emitter of claim 5, wherein said second electrode (7) permits passage of visible light from said electroluminescent material (5) to a surrounding environment.

7. The position indicating emitter of claim 6, wherein said second electrode (7) is formed from braided wire.

8. The position indicating emitter of claim 1, wherein said power source (22) comprises an inverter that produces AC voltage.

9. The position indicating emitter of claim 1 further comprising an item that may be worn by a user and that has an opening through which a body part of said user may pass, wherein a substantially looped form of said casing (13) substantially encircles said opening.

10. The position indicating emitter of claim 9, wherein said opening of said item is intended to pass a neck of said user.

11. The position indicating emitter of claim 9, wherein said item is a floatation aid.

12. The position indicating emitter of claim 9, wherein said item is an article of clothing.

13. The position indicating emitter of claim 1, wherein a substantially looped form of said casing (13) allows the position indicating emitter to be worn about a user's neck.

14. The position indicating emitter of claim 1 further comprising a life raft, wherein a substantially looped form of said casing (13) substantially encircles a portion of said lift raft.

15. The position indicating emitter of claim 1, wherein said electroluminescent material (5) comprises phosphor.

16. The position indicating emitter of claim 1, wherein said casing (13) is at least partially transparent.

17. The position indicating emitter of claim 1, wherein said radio emitter (28) continuously radiates a radio signal.

18. The position indicating emitter of claim 1, wherein said radio emitter (28) intermittently radiates a radio signal.

19. The position indicating emitter of claim 1, wherein said light emitter (20) continuously radiates light.

20. The position indicating emitter of claim 1, wherein said light emitter (20) intermittently radiates light.

## Patentansprüche

1. Positionsanzeigesender mit:
einer Stromquelle (22);
einem Lichtsender, der mit der Stromquelle (22) gekoppelt ist und der eine erste Elektrode (3), eine zweite Elektrode (7) und ein Elektrolumineszenzmaterial (5) hat, das im wesentlichen zwischen der ersten Elektrode (3) und der zweiten Elektrode (7) positioniert ist, wobei die erste Elektrode (3), die zweite Elektrode (7) und das Elektrolumineszenzmaterial (5) in einem Gehäuse (13) enthalten sind; und
einem Funksender (28), der mit der Stromquelle (22) gekoppelt ist und der eine Antenne hat, die im Gehäuse (13) enthalten ist.

2. Positionsanzeigesender nach Anspruch 1, wobei das Gehäuse (13) in einer im wesentlichen schleifenartigen Form vorgesehen ist.

3. Positionsanzeigesender nach Anspruch 1, wobei die Antenne aus der ersten Elektrode (3) und/oder der zweiten Elektrode (7) gebildet ist.

4. Positionsanzeigesender nach Anspruch 1, wobei die Antenne aus einem Material gebildet ist, das von der ersten Elektrode (3) und der zweiten Elektrode (7) getrennt ist.

5. Positionsanzeigesender nach Anspruch 1, wobei die zweite Elektrode (7) konzentrisch um die erste Elektrode (3) vorgesehen ist.

6. Positionsanzeigesender nach Anspruch 5, wobei die zweite Elektrode (7) den Durchgang von sichtbarem Licht aus dem Elektrolumineszenzmaterial (5) in eine Umgebung ermöglicht.

7. Positionsanzeigesender nach Anspruch 6, wobei die zweite Elektrode (7) aus umflochtenem Draht gebildet ist.

8. Positionsanzeigesender nach Anspruch 1, wobei die Stromquelle (22) einen Inverter aufweist, der Wechselspannung erzeugt.

9. Positionsanzeigesender nach Anspruch 1, ferner mit einem Gegenstand, der von einem Benutzer getragen werden kann und der eine Öffnung hat, durch die ein Körperteil des Benutzers durchgehen kann, wobei eine im wesentlichen schleifenartige Form des Gehäuses (13) die Öffnung im wesentlichen umfaßt.

10. Positionsanzeigesender nach Anspruch 9, wobei die Öffnung des Gegenstands den Hals des Benutzers durchlassen soll.

11. Positionsanzeigesender nach Anspruch 9, wobei der Gegenstand eine Schwimmhilfe ist.

12. Positionsanzeigesender nach Anspruch 9, wobei der Gegenstand ein Kleidungsstück ist.

13. Positionsanzeigesender nach Anspruch 1, wobei eine im wesentlichen schleifenartige Form des Gehäuses (13) ermöglicht, daß der Positionsanzeigesender um den Hals eines Benutzers getragen wird.

14. Positionsanzeigesender nach Anspruch 1, ferner mit einem Rettungsfloß, wobei eine im wesentlichen schleifenartige Form des Gehäuses (13) einen Abschnitt des Rettungsfloßes umfaßt.

15. Positionsanzeigesender nach Anspruch 1, wobei das Eiektrolumineszenzmaterial (5) Phosphor aufweist.

16. Positionsanzeigesender nach Anspruch 1, wobei das Ge-häuse (13) mindestens teilweise transparent ist.

17. Positionsanzeigesender nach Anspruch 1, wobei der Funksender (28) ein Funksignal kontinuierlich abstrahlt.

18. Positionsanzeigesender nach Anspruch 1, wobei der Funksender (28) ein Funksignal intermittierend abstrahlt.

19. Positionsanzeigesender nach Anspruch 1, wobei der Lichtsender (20) Licht kontinuierlich abstrahlt.

20. Positionsanzeigesender nach Anspruch 1, wobei der Lichtsender (20) Licht intermittierend abstrahlt.

## Revendications

1. Émetteur d'indication de position, comprenant :
- une source d'énergie (22) ;
- un émetteur de lumière qui est couplé à ladite source d'énergie (22) et qui comporte une première électrode (3), une seconde électrode (7) et un matériau électroluminescent (5) qui est positionné sensiblement entre ladite première électrode (3) et ladite seconde électrode (7), où ladite première électrode (3), ladite seconde électrode (7) et ledit matériau électroluminescent (5) sont renfermés dans un boîtier (13) ; et
- un émetteur radio (28) qui est couplé à ladite source d'énergie (22) et qui possède une antenne qui se trouve dans ledit boîtier (13).

2. Émetteur d'indication de position selon la revendication 1, où ledit boîtier (13) est réalisé en une forme sensiblement en boucle.

3. Émetteur d'indication de position selon la revendication 1, où ladite antenne est formée par au moins l'une de ladite première électrode (3) et de ladite seconde électrode (7).

4. Émetteur d'indication de position selon la revendication 1, où ladite antenne est formée à partir d'un matériau distinct de ladite première électrode (3) et de ladite seconde électrode (7).

5. Émetteur d'indication de position selon la revendication 1, où ladite seconde électrode (7) est réalisée concentriquement autour de ladite première électrode (3).

6. Émetteur d'indication de position selon la revendication 5, où ladite seconde électrode (7) permet le passage de lumière visible dudit matériau électroluminescent (5) à un environnement d'entourage.

7. Émetteur d'indication de position selon la revendication 6, où ladite seconde électrode (7) est formée à partir d'un fil tressé.

8. Émetteur d'indication de position selon la revendication 1, où ladite source d'énergie (22) comprend un onduleur qui produit une tension alternative.

9. Émetteur d'indication de position selon la revendication 1, comprenant en outre un article qui peut être porté par un utilisateur et qui présente une ouverture à travers laquelle une partie corporelle dudit utilisateur peut passer, où une forme sensiblement en boucle dudit boîtier (13) encercle sensiblement ladite ouverture.

10. Émetteur d'indication de position selon la revendication 9, où ladite ouverture dudit article est prévue pour le passage du cou dudit utilisateur.

11. Émetteur d'indication de position selon la revendication 9, où ledit article est une aide à la flottaison.

12. Émetteur d'indication de position selon la revendication 9, où ledit article est un article formant vêtement.

13. Émetteur d'indication de position selon la revendication 1, où une forme sensiblement en boucle dudit boîtier (13) permet que l'émetteur indiquant la position peut être porté autour du cou d'un utilisateur.

14. Émetteur d'indication de position selon la revendication 1, comprenant en outre un radeau de sauvetage, où une forme sensiblement en boucle dudit boîtier (13) entoure sensiblement une portion dudit radeau de sauvetage.

15. Émetteur d'indication de position selon la revendication 1, où ledit matériau électroluminescent (5) comprend du phosphore.

16. Émetteur d'indication de position selon la revendication 1, où ledit boîtier (13) est au moins partiellement transparent.

17. Emetteur d'indication de position selon la revendication 1, où ledit émetteur radio (28) fait continuellement rayonner un signal radio.

18. Emetteur d'indication de position selon la revendication 1, où ledit émetteur radio (28) fait rayonner par intermittence un signal radio.

19. Émetteur d'indication de position selon la revendication 1, où ledit émetteur de lumière (20) fait rayonner continuellement de la lumière.

20. Émetteur d'indication de position selon la revendication 1, où ledit émetteur de lumière (20) fait rayonner par intermittence de la lumière.
